# EUROPÄISCHE PATENTSCHRIFT

(11) **EP 0 378 805 B1**
(45) Veröffentlichungstag und Bekanntmachung des Hinweises auf die Patenterteilung: **21.04.1993**
(21) Anmeldenummer: 89122857.9
(22) Anmeldetag: 11.12.1989
(51) Int. Cl.: B23Q 3/08

(54) **Verfahren und Vorrichtung zum Aufspannen instabiler Teile**
Method and device for clamping instable parts
Méthode et dispositif pour le serrage de pièces instables

(30) Priorität: 18.01.1989 DE 3901254
(43) Veröffentlichungstag der Anmeldung: 25.07.1990
(73) Patentinhaber: Junker, Erwin, D-77787 Nordrach (DE)
(72) Erfinder: Junker, Erwin, D-77787 Nordrach (DE)
(74) Vertreter: Rost, Jürgen, Dipl.-Ing.

(56) Entgegenhaltungen:
- DE-A- 2 826 519
- US-A- 4 088 312
- US-A- 4 684 113
- US-A- 4 766 788

## Beschreibung

Die Erfindung betrifft eine Vorrichtung zum Aufspannen von instabilen Werkstücken mit unebener Aufspannfläche zur spanabhebenden Bearbeitung mit vorzugsweise drei axial verstellbaren Auflageeinrichtungen, die am Aufspannfutter festgelegt sind, einer Vielzahl von Saugnäpfen aus elastischem Material, die am Aufspannfutter montiert sind, einer Einrichtung zur Beaufschlagung der Saugnäpfe mit Vakuum, so daß das Werkstück gegen die Saugnäpfe festgelegt wird, und einer Vielzahl axial beweglicher Bolzen zur zusätzlichen Absrützung des Werkstücks, die unabhängig von den Auflageeinrichtungen verstellbar sind, wobei die Bolzen nach Festlegung des Werkstücks in formschlüssiger Anlage an der Aufspannfläche festsetzbar sind.

Es sind Vorrichtungen zum Einspannen instabiler Teile bei spanabhebender Planbearbeitung bekannt, bei denen das zu bearbeitende Werkstück zentriert, radial fixiert und gegen die Auflage der Aufspannvorrichtung axial festgelegt wird. Bei diesen allgemein bekannten Vorrichtungen erfolgt die axiale Festlegung durch großflächig wirkende Vakuumsaug- oder magnetische Vorrichtungen. Die dabei auftretenden Zugkräfte sind indessen so groß, daß sie die Biegefestigkeit der instabilen Teile übersteigen können. Ist die Fläche der Werkstückunterseite uneben, wird das Werkstück beim Anziehen gegen die topographisch nicht damit übereinstimmende Auflagefläche der Aufspannvorrichtung elastisch verformt. Wird nach erfolgter Planbearbeitung der Oberseite des elastisch verformten Werkstückes die Zugkraft weggenommen, entspannt sich das Werkstück und nimmt im wesentlichen seine Form wieder an, welche es vor der elastischen Verformung hatte. Das hat zur Folge, daß die vorher geplante Fläche wieder uneben ist. Dieser Vorgang wiederholt sich bei den anschließenden Bearbeitungsstufen in ähnlicher Weise, so daß zur Planbearbeitung beide Werkstückseiten mehrfach bearbeitet werden müssen.

Aus der DE-PS 35 14 741 ist eine Vorrichtung zum Feinbearbeiten ebener Flächen von scheibenförmigen Werkstücken mit unbearbeiteter Auflageseite und geringer Wanddicke mit einem vorzugsweise rotierend angetriebenen Futter zur Aufnahme des Werkstücks bekannt, bei dem das Werkstück durch drei höhenverstellbare, feste Anschlagstifte und zusätzlich durch ein oder mehrere Auflageelemente kleinstflächig abgestützt ist. Hierbei wird das Werkstück nicht axial gegen die Auflage, sondern lediglich durch das Bearbeitungswerkzeug gegen die Auflagen gedrückt.

Aus der US-A-40 88 312 ist eine gattungsgemäße Vorrichtung zum Aufspannen von Werkstücken mit variabler Aufspann-Oberfläche bekannt. In einer alternativ offenbarten Ausführungsform der Saugnäpfe mit zentral angeordneten Kunststoffdeckeln können diese auch als zusätzliche Abstützungen für das Werkstück dienen. Diese Vorrichtung hat jedoch den Nachteil, daß die axial beweglichen Saugnapfspindeln durch Federn in Richtung des Werkstücks vorgespannt sind, wodurch die Spannkraft bei gegebener Feder durch die Federkonstante festgelegt ist, in Abhängigkeit des Federweges variiert, die Saugnäpfe insgesamt abgedeckt sein müssen, da sonst kein Vakuum gebildet werden kann; damit muß das Werkstück immer eine mindestens so große Aufspannfläche aufweisen wie die Aufspannvorrichtung.

Der vorliegenden Erfindung liegt die Aufgabe zugrunde, eine Vorrichtung der eingangs beschriebenen Art anzugeben, die das Aufspannen instabiler Teile ermöglicht und die aufgezeigten Nachteile des Standes der Technik vermeidet.

Diese Aufgabe wird erfindungsgemäß dadurch gelöst, daß bei der gattungsgemäßen Vorrichtung eine Zentriervorrichtung für das Werkstück und eine fluidbetriebene, regelbare Einrichtung zur axialen Verstellung der Bolzen vorgesehen sind, die Auflageeinrichtung zentral in den Saugnäpfen angeordnet ist, die Saugnäpfe mit den Auflageeinrichtungen sowie die Bolzen jeweils gesondert aktivierbar und für die Bolzen, die nicht vom Werkstück abgedeckt sind, Verschlußdeckel zum Blockieren ihrer Bewegung in Richtung zum Werkstück vorgesehen sind.

Die erfindungsgemäße Vorrichtung hat den Vorteil, daß durch die regelbare, formschlüssige Anlage der (Abstütz-) Bolzen an die Aufspannfläche kein Druck auf diese ausgeübt wird, durch den das Werkstück aus seiner Lage bewegt oder verformt würde, vorzugsweise nur drei Saugnäpfe aktiviert werden, die aktivierten Saugnäpfe in ihrer Mitte die Auflageeinrichtung aufweisen, so daß das Werkstück nicht verformt wird, und die Saugnäpfe mit den Auflageeinrichtungen sowie die Bolzen jeweils gesondert aktiviert werden können, so daß einmal die Zugkraft zur Festlegung des Werkstücks sowie deren Wirkstelle auf die jeweiligen Bedingungen des zu bearbeitenden Werkstücks eingestellt werden können und zum anderen die Aufspannvorrichtung ohne großen Aufwand auf verschiedene Werkstückgrößen und -formen angepaßt werden kann.

Außerdem ergibt sich beim erfindungsgemäßen Gegenstand die Möglichkeit der Ausgestaltung als rotierende Aufspannvorrichtung.

Die kleinstflächige Abstützung an mehreren Stellen paßt sich auch an die Unebenheiten der Werkstückunterseite so an, daß das Werkstück in seiner gegebenen Form stabil abgestützt ist. Außerdem wird durch die kleinflächig wirkenden Zugkräfte insgesamt keine so große Zugkraft auf das Werkstück aufgebracht, daß die Biegefestigkeit des Werkstückes überschritten und das Werkstück verformt würde.

Darüber hinaus wird mit der erfindungsgemäßen Vorrichtung die Planbearbeitung flächiger instabiler Werkstücke in nur zwei Aufspannungen bei minimalem Abspanvolumen ermöglicht. Durch die Mechanisierung aller Spannfunktionen ist ein schnelles und wenig aufwendiges Arbeiten ebenso wie einfaches Umrüsten möglich. Bei einer bevorzugten Ausführungsform der Erfindung sind alle Hilfskräfte bzw. -zuführungen im Zentralschaft der Aufspannvorrichtung untergebracht, so daß sich eine kompakte Bauweise ergibt, die zudem ohne Zuhilfenahme technisch aufwendiger Mittel ermöglicht wird. Schließlich ist die Bearbeitung sowohl runder, ovaler als auch polygonaler flächiger Werkstücke möglich.

Weitere Vorteile ergeben sich aus der nachfolgenden Erläuterung der Erfindung an einem Ausführungsbeispiel anhand der beigefügten Zeichnung.

In der Zeichnung zeigen:
- Fig. 1: eine Seiten-Schnittansicht einer Aufspannvorrichtung entsprechend der Linie B-B in Fig. 2,
- Fig. 2: eine Draufsicht gemäß Richtung X in Fig. 1,
- Fig. 3: eine Schnittansicht gemäß der Linie A-A in Fig. 1,
- Fig. 4: eine Seitenansicht des Zentralschafts der Aufspannvorrichtung in teilweise geschnittener Form.

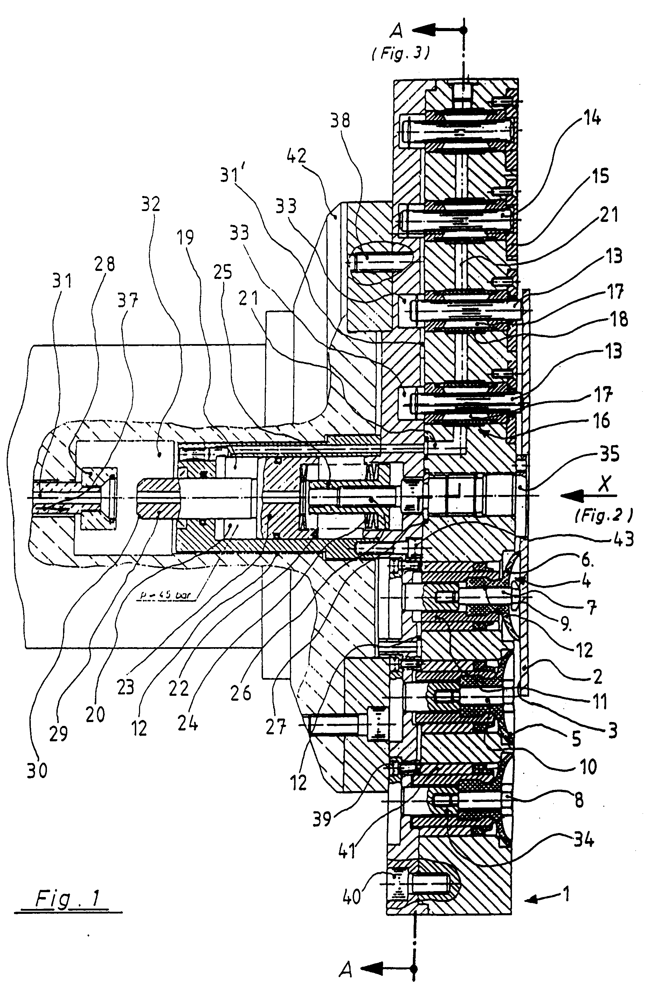

Wie aus Fig. 1 zu entnehmen ist, werden zum Aufspannen eines flächigen, instabilen Werkstücks 2 auf einer Aufspannvorrichtung 1 an den drei der Außenkante des Werkstücks 2 nächstliegenden Vakuumeinrichtungen 4 die kurzen Bolzen 10 mit glatten Köpfen 8 herausgedreht und durch lange Bolzen 7 ersetzt, so daß deren ballige Kuppen 9 horizontal in einer Ebene liegen. Hat das Werkstück 2 eine Zentralbohrung oder - ausnehmung, wird eine mit einem Führungsbolzen einstückige Zentrierscheibe 35, die im Durchmesser der Bohrung oder Ausnehmnung angepaßt ist, aufgesetzt. Das Werkstück 2 wird aufgelegt und ist durch die drei balligen Schraubenkuppen 9 stabil in horizontaler Lage abgestützt sowie durch die Zentrierscheibe 35 zentriert und radial fixiert. Fehlt eine Zentralbohrung oder -ausnehmung, wird das Werkstück 2 durch nicht dargestellte Bolzen in einem Spanfutter seitlich eingespannt und dabei zentriert und radial fixiert. Alle durch das Werkstück nicht abgedeckten axial beweglichen Bolzen 14 werden mit Verschlußdeckeln 15 abgedeckt. Durch Aktivierung eines Druckluftsystems baut sich über Druckluftkanäle 31, 31' in Druckluftkammern 33 ein Druck auf, der die nicht abgedeckten axial beweglichen Bolzen 13 an die der zu bearbeitenden Werkstückfläche abgewandten Fläche 3 anlegt, ohne einen Druck auf das Werkstück 2 auszuüben, durch den es aus seiner Lage bewegt oder verformt würde.

Danach wird das System evakuiert, damit die durch das Einschrauben der drei langen Bolzen 7 aktivierten Vakuumeinrichtungen 4 das Werk stück 2 anziehen und axial fixieren. Die Aktivierung der Vakuumeinrichtung 4 wird dadurch bewirkt, daß beim Lösen des kurzen Bolzens 10 ein Zylinder 11 freigegeben wird und nach oben rückt, so daß ein zwischen Zylinder 11 und Sockel 34 befindlicher Vakuumkanal 12 nicht mehr vom Schaft des Saugnapfes 6 verschlossen ist. Weiterhin wird durch das Lösen des kurzen Bolzens 10 das vorher zusammengepreßte elastische Material des Saugnapfes 6 entspannt, so daß sich ein Vakuumkanal 12 zwischen dem Bolzen 7 und der inneren Schaftwandung des Saugnapfes 6 bilden kann. Die zum Werkstück 2 gerichteten Kanalöffnungen werden durch den langen Bolzen 7 ebenfalls freigelassen.

Danach werden die Bolzen 13 durch Klemmbuchsen 17 festgesetzt, die hydraulisch angepreßt werden. Das wird dadurch bewirkt, daß der mechanische Druck, der über die Druckluftkanalwandung 29 auf eine Vorrichtung 22 zum Spannen und Entspannen der Hydraulik-Einrichtung 16 und damit auf einen Hydraulikkolben 23 zum Zusammendrücken eines Federpakets 24 wirkt, soweit reduziert wird, daß sich das Federpaket 24 ausdehnen kann, aber ohne daß eine Pinole 28 von einem Konus 30 gelöst wird. Das sich ausdehnende Federpaket 24 drückt den Hydraulikkolben 23 in eine Hydraulikhauptkammer 19 und spannt Hydraulikflüssigkeit 20 auf beispielsweise 45 bar, die über einen Hydraulikkanal 21 auf eine Hydraulik-Einrichtung 16 wirkt und über Hydraulikkammern 18 das Anpressen der Klemmbuchsen 17 und damit das Festlegen der Bolzen 13 bewirkt. Der Hydraulikdruck kann über eine Schraube 26, die sich gegen eine Anschlagscheibe 27 abstützt, dadurch geregelt werden, daß ein mit einem Innengewinde versehener Federteller 25 entsprechend eingestellt wird. Danach wird die Druckluft abgesperrt und die Pinole 28 vom Konus 30 gelöst. An beiden Elementen installierte Magnetventile (nicht dargestellt ( verschließen beim Lösen den Druckluftkanal 31 so, daß keine Luft in eine Vakuumkammer 32 entweicht.

Das Werkstuck 2 ist aufgespannt, d.h. es ist zentriert und sowohl radial als auch axial fixiert. Die Vakuumeinrichtungen 4 wirken dabei nur auf relativ kleine Abschnitte der Fläche 3 entsprechend der Größe des Kopfes der Saugnäpfe 6, die außerdem in der Flächenmitte durch die Kuppen 9 der balligen Schraubenköpfe der langen Bolzen 7 punktförmig abgestützt werden, so daß das Werkstück 2 nicht verformt wird. Auch die übrigen Abschnitte der Fläche 3 werden durch die formschlüssig angelegten Bolzen 13 axial so engmaschig punktförmig abgestützt, daß weder durch die Ansaugung noch durch den in Richtung der Aufspannvorrichtung 1 wirkenden Druck des Bearbeitungswerkzeuges eine Biegung des Werkstücks 2 erfolgt. Die engmaschige punktförmige Abstützung paßt sich dabei auch an Unebenheiten der Fläche 3 formschlüssig an. Auf diese Weise wird sichergestellt, daß die bearbeitete Fläche eben wird und auch nach Lösen der Aufspannung eben bleibt.

Zur Bearbeitung kann die Aufspannvorrichtung 1 rotieren und die hydraulische Festlegung der Klemmbuchsen 17 sowie die Vakuumansaugung des Werkstücks 2 bleiben bei der Rotation aktiv.

Zum Lösen der Aufspannung wird zunächst das Vakuum durch Belüftung des Systems aufgehoben und das Werkstück 2 abgenommen. Danach wird das Hydrauliksystem durch Aufbringen mechanischen Drucks über die Druckluftkanalwandung 29 und die Hydraulikkolben 23 auf das Federpaket 24 entspannt. Die Bolzen 13 sinken nach unten, und die Aufspannvorrichtung 1 ist für eine neue Aufspannung bereit.

Das Werkstück 2 wird mit der bearbeiteten Fläche auf die Aufspannvorrichtung gelegt, und alle vorbeschriebenen Tätigkeiten werden zur Aufspannung und Bearbeitung der zweiten Werkstückfläche wiederholt. Auf diese Weise wird die beidseitige Planbearbeitung instabiler flächiger Teile in nur zwei Aufspannschritten ermöglicht. Durch die Vermeidung elastischer Verformung des Werkstücks 2 wird dabei auch das Abspanvolumen minimiert.

Schrauben 39 fixieren Hülsen 41, in denen die Zylinder 11 gleiten. Schrauben 40 dienen dem Zusammenhalten des oberen und unteren Teils der Aufspannvorrichtung 1, während mittels Schrauben 38 die Anfspannvorrichtung 1 auf einem Träger 42 befestigt wird. Ein Pfeil 37 zeigt die Wirkungsrichtung der mechanischen Kraft an, mit der über die Druckluftkanalwandung 29 und den Hydraulikkolben 23 das Federpaket 24 zusammengedrückt wird.

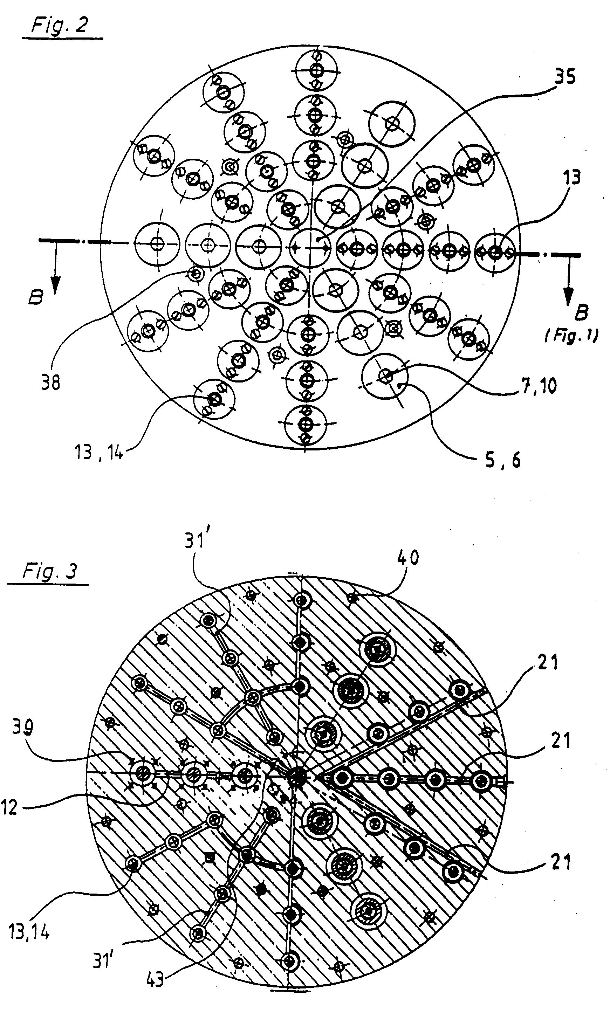

In Fig. 2 ist Lage und Ausbildung der Saugnäpfe 5, 6 und ihrer zentralen Bolzen 7, 10, der axial beweglichen Bolzen 13, 14, der Zentrierplatte 35 und der Schrauben 38 an der Oberfläche der Aufspannvorrichtung 1 dargestellt.

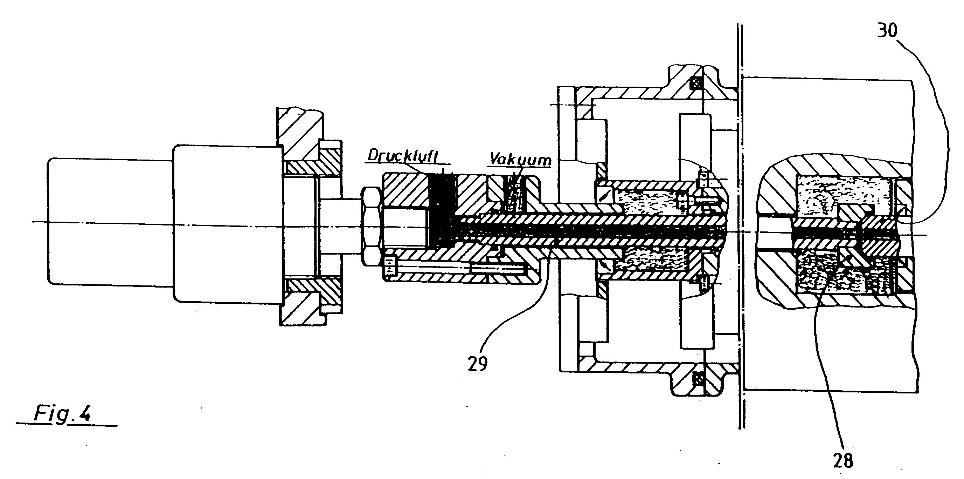

In Fig. 3 ist die Lage und der Verlauf der Vakuumkanäle 12, der Hydraulikkanäle 21 und der Druckluftkanäle 31' in der Fläche entsprechend Schnitt A-A zu erkennen. Außerdem sind die axial beweglichen Bolzen 13, 14 und die Schrauben 39, 40, 43 dargestellt.

In Fig. 4 sind der Druckluft- und Vaküumanschluß am Zentralschalt der Aufspannvorrichtung 1 gezeigt.

Die Aufspannung eines Werkstücks wurde für eine bevorzugte Ausgestaltung der erfindungsgemäßen Vorrichtung bzw. nach einer bevorzugten Verfahrensart beschrieben. Andere Ausgestaltungen, z.B. axiales Fixieren durch magnetische Zugeinrichtungen 4, durch weniger oder mehr als drei Zugeinrichtungen 4 oder das Festlegen der axial beweglichen Bolzen 13 durch andere als hydraulische Vorrichtungen werden gegebenenfalls durch die Erfindung abgedeckt.

## Patentansprüche

1. Vorrichtung zum Aufspannen von instabilen Werkstücken (2) mit unebener Aufspannfläche (3) zur spanabhebenden Bearbeitung mit
- vorzugsweise drei axial verstellbaren Auflageeinrichtungen (7), die am Aufspannfutter festgelegt sind,
- einer Vielzahl von Saugnäpfen (5, 6) aus elastischem Material, die am Aufspannfutter montiert sind,
- einer Einrichtung zur Beaufschlagung der Saugnäpfe (5, 6) mit Vakuum, so daß das Werkstück (2) gegen die Saugnäpfe (6) festgelegt wird, und
- einer Vielzahl axial beweglicher Bolzen (13, 14) zur zusätzlichen Abstützung des Werkstücks, die unabhängig von den Auflageeinrichtungen (7) verstellbar sind, wobei die Bolzen (13, 14) nach Festlegung des Werkstücks (2) in formschlüssiger Anlage an der Aufspannfläche (3) festsetzbar sind,
**dadurch gekennzeichnet, daß**
- eine Zentriervorrichtung für das Werkstück (2) und
- eine fluidbetriebene, regelbare Einrichtung zur axialen Verstellung der Bolzen (13, 14) vorgesehen sind,
- die Auflageeinrichtung (7) zentral in den Saugnäpfen (5, 6) angeordnet ist,
- die Saugnäpfe (6) mit den Auflageeinrichtungen (7) sowie die Bolzen (13, 14) jeweils gesondert aktivierbar und
- für die Bolzen (14), die nicht vom Werkstück (2) abgedeckt sind, Verschlußdeckel (15) zum Blockieren ihrer Bewegung in Richtung zum Werkstück vorgesehen sind.

2. Vorrichtung nach Anspruch 1, dadurch gekennzeichnet, daß als regelbare Einrichtung zur axialen Verstellung der Bolzen (13, 14) eine Pneumatik-Einrichtung (31, 33) und für das Festsetzen der am Werkstück (2) anliegenden Bolzen (13) eine Hydraulik-Einrichtung (16) vorgesehen ist.

3. Vorrichtung nach Anspruch 2, dadurch gekennzeichnet, daß die Hydraulik-Einrichtung (16) und die Vakuumeinrichtung (4) bei Rotation der Aufspannvorrichtung (1) während der Bearbeitung des Werkstücks wirksam bleiben.

4. Vorrichtung nach einem der Ansprüche 1 bis 3, dadurch gekennzeichnet, daß in der Mitte der Saugnäpfe (5, 6) Bolzen (7, 10) vorgesehen sind, von denen die kurzen Bolzen (10) die Saugnäpfe (5) nach unten und zusammendrücken, so daß diese Vakuumkanäle (12) verschließen, und von denen die langen Bolzen (7) die Saugnäpfe (6) entspannt und die Vakuumkanäle (12) offen lassen und mit ihren balligen Schraubenköpfen (9) eine punktförmige Auflage für das Werkstück (2) sind.

5. Vorrichtung nach einem der Ansprüche 1 bis 4, dadurch gekennzeichnet, daß die Hydraulik-Einrichtung (16) Buchsen (17), diese umschließende Ringkammern (18), eine Hydraulikhauptkammer (19), Ring- und Hauptkammern verbindende Hydraulikkanäle (21) und eine Vorrichtung (22) zum Spannen und Entspannen der Hydraulik-Einrichtung (16) aufweist, daß diese Vorrichtung (22) einen Hydraulikkolben (23), ein Federpaket (24), einen Federteller (25) und eine Schraube (26) umfaßt, über die der Federteller (25) an einer Anschlagscheibe (27) abgestützt und der Kammerdruck eingestellt wird, wobei die Hydraulik-Einrichtung (16) mittels mechanischer Kraft, die über eine Pinole (28) und Druckluftkanalwandung (29) auf den Hydraulikkolben (23) aufgebracht wird und das Federpaket (24) zusammendrückt, entspannt und umgekehrt gespannt wird.

6. Vorrichtung nach Anspruch 5, dadurch gekennzeichnet, daß der hydraulische Druck mindestens 25 bar, vorzugsweise etwa 45 bar beträgt.

7. Vorrichtung nach einem der Ansprüche 1 bis 6, dadurch gekennzeichnet, daß der Druckluftkanal (31) mittels Konus (30) und Pinole (28) trennbar ist, wobei der Druckluftkanal (31) bei Trennung durch als solche bekannte Magnetventile gegen die Vakuumkammmer (32) verschlossen wird.

8. Vorrichtung nach einem der Ansprüche 1 bis 7, dadurch gekennzeichnet, daß in der Aufspannvorrichtung (1) ein wechselbarer Führungsbolzen (34) mit integrierter Zentrierscheibe (35) vorgesehen ist.

9. Vorrichtung nach einem der Ansprüche 1 bis 7, dadurch gekennzeichnet, daß zum radialen Festlegen von Werkstücken ohne Zentralbohrung oder -ausnehmung Bolzen in die Aufspannvorrichtung (1) einschraubbar sind und der Führungsbolzen (34) keine Zentrierscheibe (35) aufweist.

## Claims

1. Device for clamping unstable workpieces (2) with uneven clamping surface (3) for metal-cutting processing, with
- preferably three axially adjustable seating devices (7) which are fixed to the chuck,
- a plurality of suction troughs (5, 6) of elastic material which are mounted to the chuck,
- a device for vacuum-loading the suction troughs (5, 6), so that a workpiece (2) is fixed against the suction troughs (6), and
- a plurality of axially movable bolts (13, 14) for additional support of the workpiece, which are adjustable independently from the seating devices (7), wherein the bolts (13, 14), after having secured the workpiece (2), are fixed in positive abutment against the clamping surface (3),
**characterised in that**
- a centring device for the workpiece (2) and
- a fluid-operated, controllable device for axial adjustment of the bolts (13, 14) is provided,
- the seating device (7) is arranged centrally in the suction troughs (5, 6),
- the respective suction troughs (6) with seating devices (7) as well as the bolts (13, 14) are separately activated and
- caps (15) are provided to block movement of the bolts (14) which are not covered by the workpiece (2) in the direction towards the workpiece.

2. Device according to claim 1, **characterised in that** a pneumatic device (31, 33) is provided as a controllable device for axial adjustment of the bolts (13, 14), and a hydraulic device (16) is provided for tightening bolts (13) abutting the workpiece (2).

3. Device according to claim 2, **characterised in that** the hydraulic device (16) and the vacuum device (4) remain operational during rotation of the clamping device (1) whilst the workpiece is being processed.

4. Device according to one of claims 1 to 3, **characterised in that** in the centre of the suction troughs (5, 6) are provided bolts (7, 10̸), the short bolts (10̸) of which press the suction troughs (5) downwards and together, thus closing vacuum channels (12), and that the long bolts (7) keep the suction troughs (6) released and the vacuum channels (12) open and serve as spot seating for the workpiece (2) by means of their bulky bolt heads (9).

5. Device according to one of claims 1 to 4, **characterised in that** the hydraulic device (16) comprises bushes (17), circular chambers (18) which surround the latter, a hydraulic master chamber (19), hydraulic channels (21) which connect ring and main chambers, and a device (22) for clamping and releasing the hydraulic device (16), that this device (22) comprises a hydraulic piston (23), a spring assembly (24), a spring plate (25) and a bolt (26), by means of which the spring plates (25) are supported against a stop plate (27) and the chamber pressure is set, in which respect the hydraulic device (16) is released, or in reverse tensioned, by means of a mechanical force which is applied via a quill (28) and compressed-air-channel wall (29) to the hydraulic piston (23) and which compresses the spring assembly (24).

6. Device according to claim 5, **characterised in that** the hydraulic pressure is at least 25 bar, preferably approximately 45 bar.

7. Device according to one of claims 1 to 6, **characterised in that** the compressed-air channel (31) is separable by means of a cone (30̸) and quill (28), in which respect in the event of separation the compressed-air channel (31) are sealed towards the vacuum chamber (32) by conventional magnetic valves.

8. Device according to one of claims 1 to 7, **characterised in that** an exchangeable guide bolt (34) with integrated centring disc (35) is provided in the clammping device (1).

9. Device according to one of claims 1 to 7, **characterised in that**, for the purpose of radial fixing of workpieces without central bore or central recess, bolts are screwed into the clamping device (1), and that the guide bolt (34) has no centring disc (35).

## Revendications

1. Un dispositif de maintien de pièces d'oeuvre instables (2), comportant des surfaces de maintien non planes (3), destiné à un usinage par enlèvement de matière, comprenant :
- de préférence trois organes d'appui réglables axialement (7), ces organes étant fixés sur le mandrin de maintien,
- une pluralité de ventouses en matière élastique (5, 6), ces ventouses étant montées sur le mandrin de maintien,
- un organe pour produire un vide dans les ventouses (5, 6) de manière à fixer la pièce d'oeuvre contre les ventouses (6), et
- une pluralité de noyaux (13, 14), mobiles axialement, de sollicitation additionnelle de la pièce d'oeuvre, ces noyaux étant réglables indépendamment des organes d'appui (7), les noyaux (13, 14) étant immobilisables après immobilisation de la pièce d'oeuvre (2) dans sa conformation définitive,
caractérisé en ce que :
- il est prévu un dispositif de centrage de la pièce d'oeuvre (2) et
- un organe réglable, commandé par fluide, pour le positionnement axial des noyaux (13, 14),
- l'organe d'appui est disposé centralement dans les ventouses (5, 6),
- les ventouses (6) sont activables séparément avec les organes d'appui respectifs (7), de même que les noyaux (13, 14), et
- pour les noyaux (14) qui ne sont pas recouverts par la pièce d'oeuvre (2), il est prévu des couvercles d'obturation (15) pour bloquer leur déplacement dans la direction de la pièce d'oeuvre.

2. Le dispositif de la revendication 1, caractérisé en ce que l'on prévoit un organe pneumatique (31, 33) comme organe réglable pour le positionnement axial des noyaux (13, 14) et un organe hydraulique (16) pour l'immobilisation des noyaux (13) reposant sur la pièce d'oeuvre.

3. Le dispositif de la revendication 2, caractérisé en ce que l'organe hydraulique (16) et l'organe pur faire le vide (4) restent actifs pendant la rotation du dispositif de maintien (1) lors de l'usinage de la pièce d'oeuvre.

4. Le dispositif de l'une des revendications 1 à 3, caractérisé en ce qu'il est prévu au milieu des ventouses (5, 6) des noyaux (7, 10), dont les courts (10) compriment les ventouses (5) ensemble et vers le bas, de manière à obturer ces canaux d'aspiration (12), et dont les longs (7) laissent les ventouses (6) relâchées et les canaux d'aspiration (12) ouverts et constituent un appui ponctuel pour la pièce d'oeuvre (2) par leurs têtes en boule (9).

5. Le dispositif de l'une des revendications 1 à 4, caractérisé en ce que l'organe hydraulique (16) comporte des manchons (17), des chambres annulaires (18) entourant ceux-ci, une chambre principale hydraulique (19), des canaux hydrauliques (21) reliant chambres annulaires et principale et un dispositif (22) pour comprimer et relâcher l'organe hydraulique, en ce que ce dispositif (22) inclut un piston hydraulique (23), un empilement de ressorts (24), un porte-ressorts (25) et une vis (26) par laquelle le porte-ressorts (25) vient buter contre une rondelle d'arrêt (27) et est ajustée la pression de chambre, de sorte que l'on relâche et, inversement, on comprime l'organe hydraulique (16) par une sollicitation mécanique que l'on applique au cylindre hydraulique (23) par un ajutage (28) et une conduite de canal de pression d'air (19), qui comprime en même temps l'empilement de ressorts (24).

6. Le dispositif de la revendication 5, caractérisé en ce que la pression hydraulique s'élève à au moins 25 bar, avantageusement environ 45 bar.

7. Le dispositif de l'une des revendications 1 à 6, caractérisé en ce que le canal de pression d'air (31) peut être ouvert au moyen d'un cône (30) et d'un ajutage (28), de manière à obturer le canal de pression d'air (31) par séparation d'avec la chambre à vide (32) au moyen de soupapes magnétiques connues en tant que telles.

8. Le dispositif de l'une des revendications 1 à 7, caractérisé en ce qu'un noyau de guidage remplaçable (34) à rondelle de centrage incorporée (35) est prévu dans le dispositif de maintien.

9. Le dispositif de l'une des revendications 1 à 7, caractérisé en ce que, pour l'immobilisation radiale de pièces d'oeuvre sans alésage ni vide central, les noyaux peuvent être vissés dans le dispositif de maintien (1) et le noyau de guidage (34) ne possède pas de rondelle de centrage (35).
